Europäisches Patentamt

European Patent Office

Office européen des brevets

(19)

(11) EP 0 572 945 B1

(12) EUROPÄISCHE PATENTSCHRIFT

(45) Veröffentlichungstag und Bekanntmachung des Hinweises auf die Patenterteilung:
26.03.1997 Patentblatt 1997/13

(51) Int Cl.⁶: **G01N 1/22**, G01N 15/02

(21) Anmeldenummer: 93108680.5

(22) Anmeldetag: 28.05.1993

(54) **Staubsammelvorrichtung**

Dust collector

Capteur de poussières

(84) Benannte Vertragsstaaten:
DE ES FR GB IT NL

(30) Priorität: 02.06.1992 DE 4218155

(43) Veröffentlichungstag der Anmeldung:
08.12.1993 Patentblatt 1993/49

(73) Patentinhaber: FRAUNHOFER-GESELLSCHAFT ZUR FÖRDERUNG DER ANGEWANDTEN FORSCHUNG E.V.
80636 München (DE)

(72) Erfinder: Holländer, Werner, Dr.
W-3100 Celle (DE)

(56) Entgegenhaltungen:
DE-A- 3 543 489          DE-A- 3 801 557
GB-A- 2 052 058          GB-A- 2 071 518
US-A- 4 461 183

• ATMOSPHERIC ENVIRONMENT, Bd. 15, 1981, Seiten 589-600; B.Y.H. LIU et al.: 'Aerosol sampling inlets and inhalable particles'
• AEROSOL SCIENCE AND TECHNOLOGY, Bd. 14, Nr. 3, 1991, Seiten 380-387; T.J. BUCKLEY et al.: 'Calibration, intersampler comparison and field application of a new PM-10 personal air-sampling impactor'

**Beschreibung**

Die Erfindung betrifft eine Staubsammelvorrichtung und ein Verfahren zur Windgeschwindigkeits- und windrichtungsunabhängigen Messung von Stäuben nach der PM-10-Konvention (im folgenden PM-10-Stäube genannt). Die Erfindung betrifft weiterhin die Verwendung der Staubsammelvorrichtung zur Messung von PM-10-Stäuben.

Verfahren zur Staubmessung sind bekannt. So beschreibt die DE-OS 38 01 557 ein Verfahren zur Messung der Luftstaubkonzentration. In dieser Schrift werden Staubpartikel durch Koronaentladung abgeschieden.

Ein besonderes Bedürfnis besteht zur Zeit in der Bestimmung von lungengängigen Partikeln mit einem Durchmesser < 10 μm. In der Direktive 80-779-EEC der Europäischen Gemeinschaft wird ein Meßverfahren für die Messung von $SO_2$ und Schwebstaub < 10 μm gefordert. Staubsammler für die Messung von lungengängigen Stäuben < 10 μm (PM-10-Methode) sind in Amerika bereits bekannt. Diese Staubsammelgeräte weisen jedoch alle einen entscheidenden Nachteil auf, da sie von der Umgebungsgeschwindigkeit und der Windrichtung abhängig sind. Der Einfluß der Windgeschwindigkeit und der Windrichtung macht sich aber bei diesen Staubsammlern gravierend bemerkbar, es werden deshalb keine reproduzierbaren Meßergebnisse erzielt.

Die Vorrichtung der Figur 12 des Artikels von B.Y. H. Liu et al.: "Aerosol sampling inlets and inhalable particles" in Atmospheric Environment, Bd. 15, 1981, Seiten 589-600, ist anscheinend windrichtungsunabhängig, und wahrscheinlich auch windgeschwindigkeitsunabhängig (siehe Seite 599, links oben). Jedoch zeigen die Kurven auf Seite 598, daß der Impaktor Windgeschwindigkeitsunabhängigkeit hat, während der Einlaß etwas Windgeschwindigkeitsabhängigkeit hat. Diese zwei kompensieren einander wahrscheinlich nicht.

Bei GB-A-2071518, das eine Staubsammelvorrichtung mit Elutriator beschreibt, scheint kein Impaktor vorhanden zu sein.

Die Vorrichtung in GB-A-2052058 hat Windgeschwindigkeitsunabhhängigkeit, aber es scheint kein Impaktor zu haben.

US-A-4461183, Spalte 6, Z.49-53 erwähnt, daß Windgeschwindigkeits- und Windrichtungsunabhängigkeit vorhanden ist. Jedoch, obwohl das Rohr 14 als Elutriator identifiziert werden kann, ist es zweifelhaft, daß ein Impaktor vorhanden ist. Auch ist nichts über individuelle Windgeschwindigkeitsabhängigkeit erwähnt.

Aufgabe der Erfindung ist es daher, eine Vorrichtung und ein Verfahren zur Messung von PM-10-Stäuben anzugeben, bei dem Stäube < 10 μm windrichtungs- und windgeschwindigkeitsunabhängig gemessen werden können.

Die Erfindung wird durch die kennzeichnenden Merkmale des Anspruchs 1 gelöst. Die Unteransprüche 2 bis 6 stellen vorteilhafte Weiterbildungen dar.

Das Verfahren wird durch die kennzeichnenden Merkmale des Anspruchs 7 gelöst. Anspruch 8 gibt die erfindungsgemäße Verwendung der Vorrichtung an.

Erfindungsgemäß wird demnach die Windgeschwindigkeits-Unabhängigkeit dadurch erreicht, daß die Dimensionierung der Elutriator-Impaktor-Einheit so gewählt wird, daß sich die Durchlaßcharakteristiken des Elutriators bzw. des Impaktors bezüglich der Windgeschwindigkeits-Abhängigkeit annähernd kompensieren.

Dies ist dadurch möglich, da die Penetration sowohl des Impaktors wie auch des Elutriators von der Windgeschwindigkeit und den geometrischen Auslegungen des Impaktors wie auch des Elutriators abhängt.

Die Penetration des Elutriators läßt sich dabei durch die folgende Formel beschreiben:

$$P_{el} = 1 - \gamma V_{sed}/V_{flow}$$

Die Penetration des Impaktors ist dabei durch folgende Beziehung definiert:

$$P_{imp} = 1 - \frac{1}{1 + \delta StK^{\varepsilon}}$$

$\gamma$, $\delta$ und $\varepsilon$ sind dabei Parameter, die von der Konstruktion des Elutriators bzw. des Impaktors abhängen. $V_{sed}$ bedeutet die Sedimentationsgeschwindigkeit und Stk die Stokezahl. In der Stokezahl wiederum sind die geometrischen Abmessungen des Impaktors sowie die Partikelsedimentationsgeschwindigkeit enthalten.

Es ist nun leicht zu sehen, daß die Penetration des Elutriators mit steigener Windgeschwindigkeit ($V_{flow}$) steigt, wohingegen die Penetration des Impaktors mit steigender Windgeschwindigkeit fällt. Die Gesamtpenetration ergibt sich nun logischerweise aus dem Produkt der Penetration des Elutriators und des Impaktors.

Aufgrund des Umstandes, daß in die Penetration sowohl des Elutriators und des Impaktors die Größenverhältnisse, bzw. die Dimensionierung des Elutriators und des Impaktors eingehen, ist es nun möglich, durch Aufnahme der entsprechenden Durchlaßcharakteristiken auch auf die entsprechenden Größenverhältnisse zurückzuschließen und einen Elutriator und einen Impaktor bereitzustellen, der solche Größenverhältnisse aufweist, daß sich die Durchlaßcharakteristiken des Elutriators und des Impaktors annähernd kompensieren.

Erfindungswesentlich dabei ist weiterhin, daß am Ausgang des Elutriators der Impaktor angeordnet ist, da ansonsten keine Kompensation der Durchlaßcharakteristiken erfolgen kann.

Für die vorgeschlagene Vorrichtung sind alle gängigen Impaktor- und Elutriator-Konstruktionen (Runddüsen-, Schlitz-, Topf-Impaktoren; Vertikal-/Horizontal-Elutriatoren) einsetzbar, sofern sie konstruktiv so gestaltetwerden können, daß das Produkt ihrer Durchlaßkurven annähernd unabhängig von der Windgeschwindigkeit die PM-10-Forderung erfüllt. Besonders vorteilhaft bei der vorgeschlagenen Vorrichtung ist hierbei weiter noch, daß die Umgebungsgeschwindigkeit zum Betrieb der PM-10-Vorrichtung unmittelbar verwendet wird und daher auf eine Pumpe oder sonstige bewegliche, beziehungsweise energiebenötigende Vorrichtung verzichtet werden kann.

Die Windrichtungsunabhängigkeit wird erfindungsgemäß dadurch erreicht, daß mindestens zwei Elutriator-Impaktor-Einheiten symmetrisch bezüglich einer vertikalen Achse angeordnet sind. In einer bevorzugten Ausführungsform sind 6 Elutriator-Impaktor-Einheiten um eine vertikale Achse vorgesehen. Dadurch wird gewährleistet, daß unabhängig von der Windrichtung jeweils immer eine Elutriator-Impaktor-Einheit vom Wind durchströmt wird und die Kammer mit PM-10-Stäuben gefüllt wird. Die anderen Einheiten leisten dann keinen Beitrag zur Messung.

In einer weiteren bevorzugten Ausführungsform wird die Windrichtungsunabhängigkeit dadurch erreicht, daß eine einzige Elutriator-Impaktor-Einheit so angeordnet ist, daß sie sich fortwährend nach dem Wind ausrichtet, zum Beispiel durch eine Wetterfahne. Dies wird möglich, wenn die Elutriator-Impaktor-Einheit um eine vertikale Achse drehbar ist.

In einer weiteren Ausgestaltung der Erfindung wird vorgeschlagen, diese neuartige Meßmethode mit einem bereits bekannten Abscheidungsverfahren zu kombinieren. In der DE 38 01 557 A1 ist die Abscheidung von Stäuben mittels Korona-Entladung beschrieben. Die erfindungsgemäße Vorrichtung läßt sich nun mit dieser Abscheidungsmethode kombinieren, so daß die Vorteile der Koronaentladung mit der Windgeschwindigkeits- und windrichtungsunabhängigen Messung ohne die Notwendigkeit zusätzlicher Pumpen kombiniert werden können.

Die Erfindung wird anhand der Figuren 1 bis 5 näher erläutert.

Figur 1 zeigt eine Ausgestaltungsform der erfindungsgemäßen Vorrichtung, nämlich die Anordnung der Elutriator-Impaktor-Einheiten um eine vertikale Achse in der Seitenansicht.

Figur 2 zeigt die Vorrichtung nach Figur 1 in der Draufsicht.

Die Figur 3 zeigt die Elutriator-Durchlaßkurve als Funktion des aerodynamischen Partikeldurchmessers dp für verschiedene Windgeschwindigkeiten.

Figur 4 zeigt die Impaktor-Durchlaßkurve als Funktion des aerodynamischen Partikeldurchmessers dp für verschiedene Windgeschwindigkeiten.

Figur 5 zeigt die Durchlaßkurve für eine Serienschaltung eines Elutriators mit einem Impaktor.

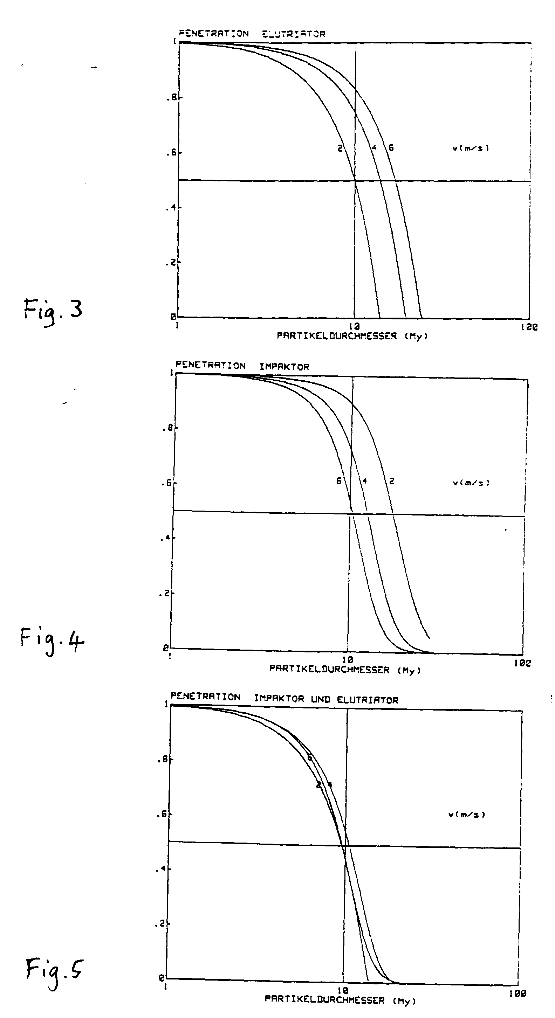

Figur 3 zeigt für verschiedene Windgeschwindigkeiten, nämlich für 2, 4 und 6 m pro Sekunde die Durchlaßkurve als Funktion des aerodynamischen Partikeldurchmessers dp. Aus dieser Kurve geht hervor, wie sich die Windgeschwindigkeit auf die Durchlaßkurve auswirkt. Die Penetration nimmt somit mit steigender Windgeschwindigkeit zu.

Im Vergleich dazu zeigt die Figur 4 die Durchlaßkurve für den Impaktor, ebenfalls für die Windgeschwindigkeiten 2, 4 und 6 m pro Sekunde. Die Penetration nimmt somit mit steigender Windgeschwindigkeit ab.

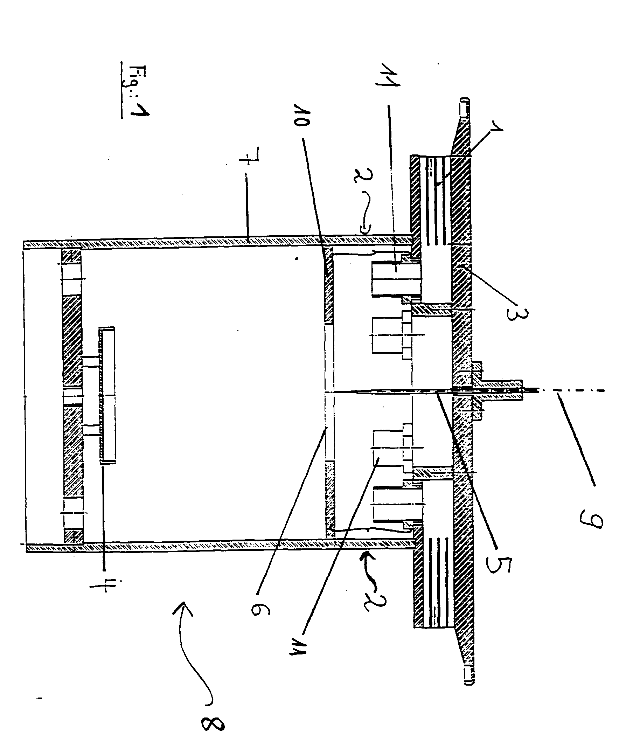

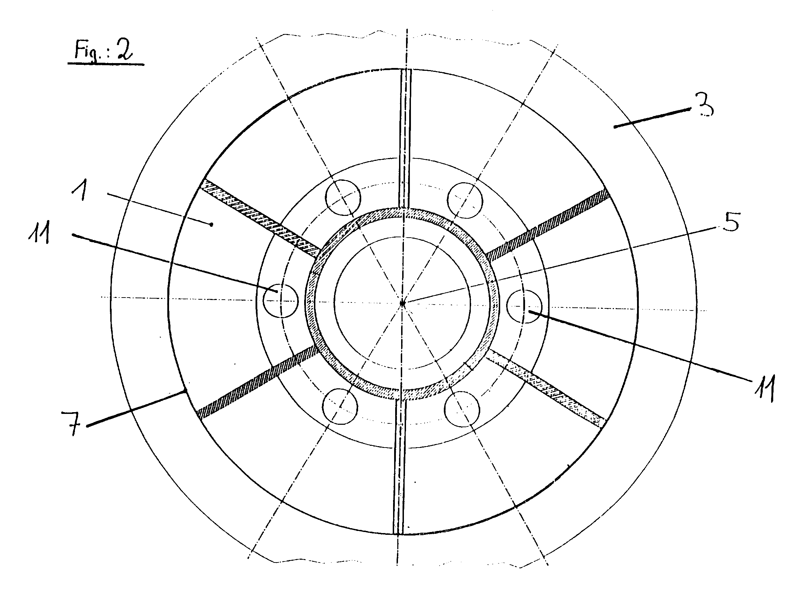

Figur 5 macht nun sehr schön deutlich, wie sich die Effekte von Abbildung 1 und Abbildung 2, das heißt von den Durchlaßkurven des Elutriators und Impaktors nahezu vollständig kompensieren und somit eine windgeschwindigkeitsunabhängige Abscheidung erfolgt, wenn eine bestimmte Dimensionierung ausgewählt wurde.

Figur 1 zeigt nun eine erfindungsgemäße Ausstattung der Erfindung, nämlich für den Fall, daß mehrere Elutriator-Impaktor-Einheiten symmetrisch bezüglich einer vertikalen Achse 9 in einem Behälter 8 angeordnet sind. Der Elutriator 1 ist dabei horizontal angeordnet, wobei sich am Ausgang des Elutriators in einem Winkel von 90° der Impaktor 2, der durch die Düse 11 und ein Aufprallblech 10 gebildet wird, anschließt.

Im Beispielsfall sind nun 6 derartige Einrichtungen symmetrisch um eine vertikale Achse 9 angeordnet. Der Behälter 8 wird dabei durch die Dachplatte 3 und die Außenhaut 7 des Zylinders gebildet. Als Besonderheit der Vorrichtung ist zu erwähnen, daß die Umgebungsgeschwindigkeit zum Betrieb des Staubsammlers unmittelbar verwendet wird und daher auf eine Pumpe oder sonstige bewegliche, beziehungsweise energiebenötigende Vorrichtung verzichtet werden kann. Dadurch kann nun die Vorrichtung mit einer Koronaentladung kombiniert werden.

In der erfindungsgemäßen Ausgestaltung nach Figur 1 ist dabei die Koronanadel 5 in der Mitte des Behälters 8 angeordnet und kann somit gleichzeitig für alle Einzelimpaktoren für die Abscheidung wirksam werden. Die Staubpartikel werden dann durch die Abscheideöffnung 6 auf der Abscheidefläche 4 niedergeschlagen. In der Ausführungsform nach Figur 1 ist der Behälter 8 in Form eines Zylinders ausgebildet.

Erfindungswesentlich ist nun, daß die Dimensionierung des Elutriators-Impaktors so erfolgt, daß sich die Durchlaßcharakteristiken des Impaktors 2 und Elutriators 1 annähernd kompensieren. Trifft nun ein Wind mit einer unterschiedlichen Geschwindigkeit in die Eintrittsöffnung des Elutriators 1 ein, so werden hier im Elutriator 1, der ein im Verhältnis zum Impaktor 2 größeres Volumen hat, nur die kleineren Teile abgeschieden, wohingegen bei einer erhöhten Geschwindigkeit auch ein erhöhter Durchlaß und somit die größeren Teile durch den Elutriator 1 hindurchtreten. Diese Teile werden nun am Ende des Elutriators 1 umgelenkt und in den Impaktor 2 geführt, der im Verhältnis zum Elutriator 1 nur einen sehr kleinen Durchmesser hat. Dadurch entsteht ein Staudruck und die durch den Impaktor 2 hindurchtretenden größeren Teilchen werden auf das Prallblech 10 umgelenkt und somit auf diesem abgeschieden. Bei einer entsprechenden Dimensionierung des Elutriators 1 und Impaktors 2 kompensieren sich nun die beiden Durchlaßcharakteristiken, so daß eine windgeschwindigkeitsunabhängige Abscheidung ermöglicht wird.

Erfindungsgemäß hat aber die Vorrichtung den zusätzlichen Vorteil, daß sie noch windrichtungsunabhängig ist. Im Beispielsfall nach Figur 1 ist es nun unerheblich, von welcher Richtung der Wind kommt, da durch die zylindrische Ausgestaltung immer eine Elutriator-Impaktor-Einheit so ausgerichtet ist, daß sie vom Wind durchströmt wird und eine Messung vorgenommen werden kann. Die anderen Einheiten leisten dann keinen Beitrag zur Messung. Erfindungsgemäß ist es aber auch möglich, daß hier andere Konstruktionen eingesetzt werden, zum Beispiel nur eine einzige Elutriator-Impaktor-Einheit, die sich dann mittels einer Windfahne am Wind ausrichtet.

Figur 2 zeigt nun die Draufsicht der Vorrichtung nach Figur 1. Aus Figur 2 ist ersichtlich, in welchen Größenverhältnissen der Elutriator 1 zum Impaktor 2 steht. 7 zeigt wieder die Außenhaut des Zylinders und 3 die Dachplatte. Die vertikale Achse 9 wird hier durch die Koronanadel 5 gebildet.

Erfindungsgemäß wird somit erstmals eine Vorrichtung zur Verfügung gestellt, die windgeschwindigkeits- und windrichtungsunabhängig messen kann.

**Patentansprüche**

1. Staubsammelvorrichtung mit PM-10-Charakteristik, mit mindestens einer in einem Gehäuse (8) um eine Achse (9) angeordneten Elutriator-Impaktor-Einheit, wobei am Ausgang des Elutriators (1) der Impaktor (2) angeordnet ist und die Dimensionierung der Elutriator-Impaktor-Einheit so gewählt ist, daß sich die Durchlaßcharakteristiken des Elutriators (1) bzw. des Impaktors (2) bezüglich der Windgeschwindigkeits-Abhängigkeit annähernd kompensieren und daß diese Elutriator-Impaktor-Einheit windrichtungsunabhängig ist.

2. Staubsammelvorrichtung nach Anspruch 1, dadurch gekennzeichnet, daß die Elutriator-Impaktor-Einheit aus einem im Gehäuse (8) horizontal angeordneten Elutriator (1) und einem dazu im Winkel von etwa 90° angeordneten Impaktor (2) besteht, und daß diese Elutriator-Impaktor-Einheit um eine vertikale Achse (9) angeordnet ist.

3. Staubsammelvorrichtung nach Anspruch 1 bis 2, dadurch gekennzeichnet, daß mindestens zwei Elutriator-Impaktor-Einheiten symmetrisch um die vertikale Achse (9) angeordnet sind.

4. Staubsammelvorrichtung nach Anspruch 3, dadurch gekennzeichnet, daß sechs Elutriator-Impaktor-Einheiten vorgesehen sind.

5. Staubsammelvorrichtung nach Anspruch 1 bis 2, dadurch gekennzeichnet, daß eine Elutriator-Impaktor-Einheit um eine vertikale Achse (9) drehbar ist, so daß mittels einer geeigneten Einrichtung, z. B. einer Wetterfahne, eine Ausrichtung der Elutriator-Impaktor-Einheit nach der Windrichtung erfolgt.

6. Staubsammelvorrichtung nach Anspruch 1 bis 5, dadurch gekennzeichnet, daß die Staubabscheidung aus der Elutriator-Impaktor-Einheit im Gehäuse (8) mittels einer Korona-Entladung herbeigeführt wird.

7. Verfahren zur Windgeschwindigkeits- und windrichtungsunabhängigen Messung von PM-10-Stäuben, dadurch gekennzeichnet, daß die Messung mit einer Vorrichtung nach den Ansprüchen 1 bis 6 vorgenommen wird.

8. Verwendung der Vorrichtung nach Anspruch 1 bis 6 zur Windgeschwindigkeits- und windrichtungsunabhängigen Messung von PM-10-Stäuben.

**Claims**

1. Dust collector apparatus with PM-10 characteristics, having at least one elutriator-impactor unit arranged in housing (8) about an axis (9), wherein the impactor (2) is arranged at the output of the elutriator (1) and the dimensioning of the elutriator-impactor unit is so selected that the throughflow characteristics of the elutriator (1) and the impactor (2) approximately compensate in relation to the wind speed dependence and that this elutriator-impactor unit is independent of wind direction.

2. Dust collector apparatus according to claim 1, characterized in that the elutriator-impactor unit consists of an elutriator (1) horizontally arranged in the housing (8) and an impactor (2) arranged at an angle of about 90° thereto, and in that this elutriator-impactor unit is arranged about a vertical axis (9).

3. Dust collector apparatus according to claim 1 or 2, characterized in that at least two elutriator-impactor units are arranged symmetrically about the vertical axis (9).

4. Dust collector apparatus according to claim 3, characterized in that six elutriator-impactor units are provided.

5. Dust collector apparatus according to claim 1 or 2, characterized in that an elutriator-impactor unit is rotatable about a vertical axis (9), so that alignment of the elutriator-impactor unit according to the wind direction is effected by means of a suitable device, e.g. a weather vane.

6. Dust collector apparatus according to claim 1 to 5, characterized in that the dust precipitation from the elutriator-impactor unit in the housing (8) is effected by means of a corona discharge.

7. A method of measuring PM-10 dusts independent of the wind speed and wind direction, characterized in that the measurement is effected with an apparatus according to claims 1 to 6.

8. Use of the apparatus according to claim 1 to 6 for measurement of PM-10 dusts independent of wind speed and wind direction.

**Revendications**

1. Dispositif collecteur de poussières à caractéristique PM-10, comprenant au moins un ensemble d'élutriateur-impacteur monté avec son axe (9) dans un boîtier (8), l'impacteur (2) se trouve à la sortie de l'élutriateur (1) et le dimensionnement de l'ensemble élutriateur-impacteur est choisi pour que les caractéristiques de passage dans l'élutriateur (1) ou l'impacteur (2) se compensent pratiquement pour la dépendance par rapport à la vitesse du vent et l'ensemble élutriateur-impacteur est indépendant du sens du vent.

2. Dispositif collecteur de poussières selon la revendication 1,
caractérisé en ce que

l'ensemble élutriateur-impacteur se compose d'un élutriateur (1) placé horizontalement dans un boîtier (8) et d'un impacteur (2) faisant par rapport à celui-ci un angle d'environ 90° et l'ensemble élutriateur-impacteur tourne autour d'un axe vertical (9).

3. Dispositif collecteur de poussières selon la revendication 1 et 2,
caractérisé en ce qu'
au moins deux ensembles élutriateur-impacteur sont montés symétriquement autour de l'axe vertical (9).

4. Dispositif collecteur de poussières selon la revendication 3,
caractérisé par
six ensembles élutriateur-impacteur.

5. Dispositif collecteur de poussières selon les revendications 1 et 2,
caractérisé en ce qu'
un ensemble élutriateur-impacteur tourne autour d'un axe vertical (9) pour qu'à l'aide d'une installation appropriée, par exemple une girouette, l'ensemble élutriateur-impacteur s'oriente suivant la direction du vent.

6. Dispositif collecteur de poussières selon les revendications 1 à 5,
caractérisé en ce que
la séparation de la poussière dans l'ensemble élutriateur-impacteur se fait dans le boîtier (8) par décharge à effet corona.

7. Procédé pour mesurer des poussières PM-10 indépendamment de la vitesse du vent et de sa direction,
caractérisé en ce que
la mesure est faite à l'aide d'un dispositif selon l'une des revendications 1 à 6.

8. Application du dispositif selon les revendications 1 à 6 pour la mesure de poussières PM-10, indépendamment de la vitesse et de la direction du vent.

Fig.: 1

Fig.: 2

Fig.3

PENETRATION ELUTRIATOR

Fig.4

PENETRATION IMPAKTOR

Fig.5

PENETRATION IMPAKTOR UND ELUTRIATOR